# DEMANDE DE BREVET EUROPEEN

(11) **EP 2 822 192 A1**
(43) Date de publication de la demande: **07.01.2015**
(21) Numéro de dépôt: 14174971.3
(22) Date de dépôt: 30.06.2014
(51) Int. Cl.: H04B 7/06

(54) **Système de production de faisceaux directifs multi liens simultanés**

(30) Priorité: 02.07.2013 FR 1356443
(71) Demandeur: Bluwan, 78230 Le Pecq (FR)
(72) Inventeur: Magne, Francois, 78230 LE PECQ (FR)
(74) Mandataire: Dudouit, Isabelle

(57) **Abrégé**

L'invention concerne un système de formation de faisceaux adaptés à une couverture donnée, caractérisé en ce qu'il comporte au moins les éléments suivants : un gestionnaire (21) de configuration, un ensemble de modems (22i) en liaison avec des commutateurs (23), des multiplexeurs (24) pour multiplexer les modems par groupe sur autant de ports intermédiaires correspondant chacun à un faisceau, un module de formation de voies (25) générant un nombre de voies réparties autour de l'axe de l'antenne, un module de déphasage (26) des faisceaux de chacune des voies Vj, un module de transposition-amplification (27) de puissance, au moins deux antennes (29i) connectées audit module de transposition-amplification (27). Pour la partie réception le système comprend un ensemble de modules identiques à l'exception du module transposition-amplification (37) qui effectue la réception faible bruit et la transposition.

## Description

L'objet de l'invention concerne un système permettant de générer un ensemble de faisceaux directifs multi liens simultanés, dont la disposition est optimisée en bilan de liaison pour la couverture de terminaux qui se trouvent dans un secteur donné.

L'invention est notamment destinée aux systèmes constitués d'un ensemble de connexions permettant d'alimenter et de regrouper des points de présence depuis et vers le réseau d'infrastructure, plus connu sous le terme anglo-saxon « Backhaul ».

La connexion ou « Backhaul » à très haut débit (THD) de la quatrième génération de radio-mobile (LTE), des bornes Wifi ou points Wifi plus connus sous les acronymes anglo-saxon «Hots spots», ou encore des entreprises, consiste à disposer d'un réseau sans-fil point à multipoint depuis une station centrale vers des terminaux en établissant des liens simultanés de très haut débit, autour de 100 Mbps, depuis cette station centrale ou Hub de Transmission vers chaque terminal.

La couverture est souvent réalisée par secteurs, typiquement de 90°. Les besoins en capacité pour le Backhaul de laquatrième génération de radio mobile sont de plusieurs gigabits par secteur et plus précisément de quelques Gigabits par km². Pour atteindre de telles capacités, il faut disposer de très larges bandes radio comme celles disponibles dans les hyperfréquences de longueur d'onde numérique, ou EHF acronyme anglo-saxon de «Extremely High Frequency», les seules à disposer de très larges bandes supérieures au GHZ (bandes Q, W, E ou D) ou en hyperfréquences de longueurs d'onde centimétriques ou SHF acronyme anglo-saxon de Specially High Frequency (bandes Ku ou Ka). Pour le cas de la SHF, le spectre encombré ne permet pas d'obtenir dans l'éther la bande demandée; en revanche en fréquence intermédiaire (cachée) le coût-efficacité des traitements dans cette gamme de fréquence est optimal. Il existe peu de système point multipoint de grande capacité actuellement, citons le Service de distribution local multipoint ou LMDS (Local Multipoint Distribution Service) de la société Cambridge Telecom et le système FTTA du Demandeur capable de multiplexer une vingtaine de modulateurs-démodulateurs ou modems à 100Mbps sur un secteur.

Bien que les différents systèmes fonctionnent correctement, il est nécessaire d'accroître leurs performances, d'optimiser les ressources spectrales, la réutilisation des fréquences par exemple et de traiter les problèmes de gestion de capacité (en anglo-saxon « load-balancing ») ou de résilience.

Les définitions suivantes seront utilisées dans la description qui va suivre de l'invention.

Le très haut débit ou THD concerne des vitesses de transmission sur chaque lien d'au moins 20Mbps, le haut débit concernant des vitesses de 2 Mbps et plus. La capacité est la somme des débits sur chaque lien.

Les systèmes « point à multipoints » utilisent au niveau de leur station centrale des antennes sectorielles qui établissent les connexions avec les terminaux situés sous la couverture de l'antenne sectorielle. La transformation d'un faisceau sectoriel en un groupe de faisceaux plus directifs à gains supérieurs au sein de ce faisceau sectoriel est désignée sous le terme «multibeam». Il s'agit d'un rayonnement de la station centrale dans un secteur qui présente plusieurs faisceaux de communication avec un fort gain supérieur à celui d'une antenne sectorielle. Le dispositif de formation de voies associées à ces faisceaux est nommé MBF pour «multibeam former». Ces voies véhiculent les multiplex dans les sous-secteurs (faisceaux) adaptés à la répartition des terminaux et à leurs besoins en débit. Chacun des ports d'entrée du MBF est alimenté par un multiplex de plusieurs modems, on a autant de multiplexeurs que de sous-secteurs ou faisceaux. Les ports de sortie du MBF sont chacun connectés à une antenne élémentaire, directement si l'on forme les voies en radiofréquence RF, ou indirectement si l'on forme les voies en fréquence intermédiaire FI. Le document WO 2008/049191 pose et résout le problème de minimisation des interférences possibles générées par des composants électroniques.

Le muliplex est l'association de plusieurs formes d'onde envoyée sur chacun des faisceaux, chaque forme d'onde est émise sur un canal correspondant à un modem. Chacun des faisceaux peut véhiculer un ou plusieurs canaux bidirectionnels. Un multiplex contient plusieurs canaux, un canal est associé à un modem, chacun des canaux a une fréquence différente et peut avoir une bande différente ainsi qu'un ordre de modulation différent. Les multiplex peuvent être différents les un des autres. On a ainsi dans un faisceau une capacité diversifiée, celle-ci étant composée de débits diversifiés.

On désigne par le terme «faisceau» les lobes radioélectriques propagés dans l'éther. On désigne par «voies», les chemins suivis dans les circuits qui, par combinaison hyperfréquence dans le système antennaire, vont créer les faisceaux.

Un des objectifs de la présente invention est de proposer un système de très haute capacité, capable de délivrer dans plusieurs directions simultanées des capacités de n*100Mbps, où n est modulable à la demande, afin de réaliser notamment les fonctions suivantes: un accroissement notable du bilan des liaisons, une optimisation des bilans de liaison selon la distance à laquelle se trouve un terminal, plus connu sous l'expression anglo-saxonne «near-far», une fonction d'équilibrage des flux connus sous le terme anglosaxon « load-balancing », une fonction de résilience, une gestion d'entrée de nouveaux terminaux, enfin la suppression des interférences d'un secteur avec le secteur voisin.

L'objet de l'invention concerne un système réalisant la formation de faisceaux directifs multi liens simultanés et adaptés à une couverture donnée, utilisant une ou plusieurs antennes multifaisceaux, caractérisé en ce qu'il comporte au moins les éléments suivants :
- un gestionnaire de configuration adapté à gérer des commandes de commutation et de déphasage configurant les faisceaux,
- un ensemble de modems adapté à fonctionner à une fréquence intermédiaire configurée par le gestionnaire,
- pour la partie émission chaque sortie d'un modem étant en liaison avec un ensemble de commutateurs affectant les modems à plusieurs voies Vj,
- un ensemble de multiplexeurs recevant les signaux issus de l'ensemble de modems, ledit ensemble étant adapté à multiplexer les modems par groupe sur autant de ports intermédiaires correspondant chacun à un faisceau,
- un module de formation de voies Vj recevant chaque sortie des multiplexeurs, afin de créer un nombre de voies Vj réparties autour de l'axe de l'antenne,
- un module de déphasage adapté à appliquer un déphasage sur chacune des voies Vj,
- un module de transposition-amplification de puissance piloté par un module de pilotage,
- au moins deux antennes élémentaires connectées audit module de transposition-amplification.

Le système peut comporter, au niveau de la partie réception :
- un ensemble d'antennes reliées à un module de transposition-amplification,
- un module de déphasage,
- un module de formation de voies,
- un démultiplexeur relié à un ensemble de commutateurs, ledit ensemble de commutateurs étant relié aux modems.

Selon un mode de réalisation, le système est adapté à fonctionner en hyperfréquence SHF/EHF, l'ensemble commutateurs, le module de multiplexage, le module formation de voies, le module de déphasage étant adaptés à travailler en SHF, le module de transposition et les antennes élémentaires étant adaptés à travailler en EHF.

Les modules travaillant en SHF sont, par exemple, des circuits passifs et les modules de transposition amplification sont des circuits intégrés monolithique hyperfréquence MMIC AsGa.

Le module de pilotage est, par exemple, un oscillateur local très stable à faible bruit de phase, distribué au module de transposition-amplification.

Le module de pilotage est, par exemple, un synthétiseur.

Les antennes utilisées dans le système sont, par exemple, des antennes colonnes de patch ou fentes.

Selon un autre mode de réalisation, les antennes sont des antennes sources au plan focal d'une lentille.

L'invention concerne notamment un dispositif hyperfréquence dans un système ou réseau Ethernet sans-fil de très haute capacité.

D'autres caractéristiques et avantages du système selon l'invention apparaîtront mieux à la lecture de la description qui suit d'un exemple de réalisation donné à titre illustratif et nullement limitatif annexé des figures qui représentent :
- la figure 1, une représentation des faisceaux émis par le système et des terminaux affectés à ces faisceaux avec des liens de capacités variées,
- la figure 2, un bloc diagramme fonctionnel d'ensemble,
- la figure 3, un schéma de commutation vers le multiplexage,
- la figure 4, un schéma de la carte SHF et du module de formation de voies,
- la figure 5, un exemple de carte EHF pour la partie émission du système,
- la figure 6, un exemple de formation de faisceaux ou diagrammes de rayonnement,
- la figure 7, les diagrammes de rayonnement par réglage des voies par déphasage,
- la figure 8, la création des faisceaux par association des éléments rayonnants, et
- la figure 9A et la figure 9B, deux exemples de sous-système antennaire.

La description qui suit, donnée à titre illustratif et nullement limitatif, concerne un système de Backhaul Gigabit de type point à multipoint ou PmP sur ondes SHF ou EHF connectant un point d'accès à l'infrastructure ou fibre, à des terminaux à haute capacité tels les stations de base de radio mobile, les hot spots WiMax et Wifi, des immeubles ou des groupes entreprises.

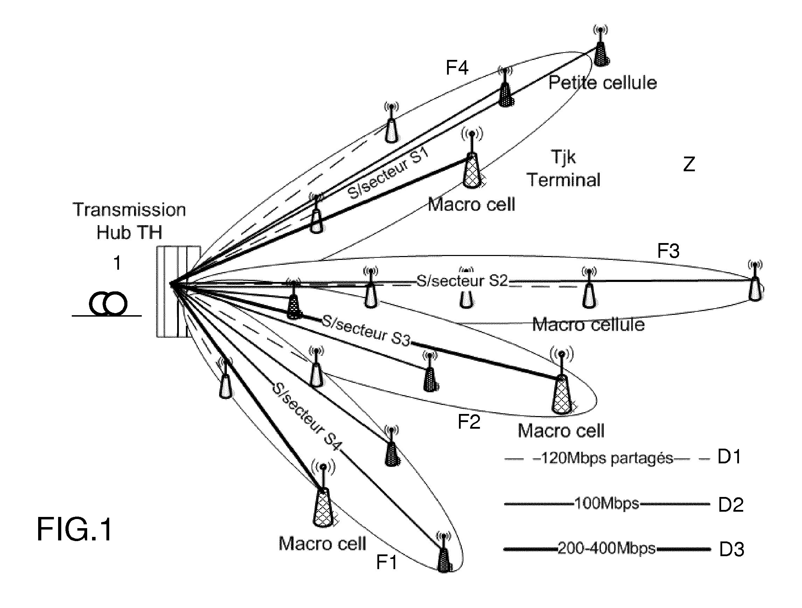

Le principe du système consiste notamment à former des faisceaux adaptés à la couverture des terminaux avec des antennes multifaisceaux afin de ne pas éclairer les zones sans terminaux, ou d'éclairer peu les zones où les terminaux sont proches de la base centrale et de donner du gain aux terminaux éloignés. On va créer un ensemble de faisceaux simultanés que l'on oriente définitivement pour établir des liaisons multiples et permanentes fixes, optimisées en bilan de liaison et à débit variable comme il est présenté à la figure 1.

Sur cette figure 1 le système, depuis une base 1 ou Transmission Hub, crée dans un secteur donné Z, un ensemble de faisceaux Fj directifs multi liens et simultanés. La zone ou secteur Z comprend plusieurs sous-secteurs SSi et différents débits de transmission, référencés, par exemple D₁ pour un débit de 120Mbps, D₂ pour 100Mbps, D₃ pour l'intervalle [200Mbps-400Mbps], ces débits étant affectés en fonction du type de terminal, par exemple. La disposition des faisceaux est optimisée en bilan de liaison pour la couverture des terminaux Tjk qui s'y trouvent comme il sera décrit ci-après.

Le système, depuis la base 1, affecte à chacun de ces faisceaux Fj des liens multiples de capacités diverses à des terminaux Tjk, kème terminal dans le faisceau Fj, et qui sont adaptables en fonction du besoin du moment. Ainsi, dans chaque faisceau Fj les terminaux Tjk sous la couverture de ce faisceau disposent de débits Dk différenciés.

Ces liens sont par exemple assurés au niveau des couches ISO 1 et ISO 2 des terminaux par des modems de capacité d'au moins 20Mbps et typiquement de 100Mbps, créant ainsi un système de capacité supérieure au Gigabit par secteur et de plusieurs centaines de Megabits par faisceau.

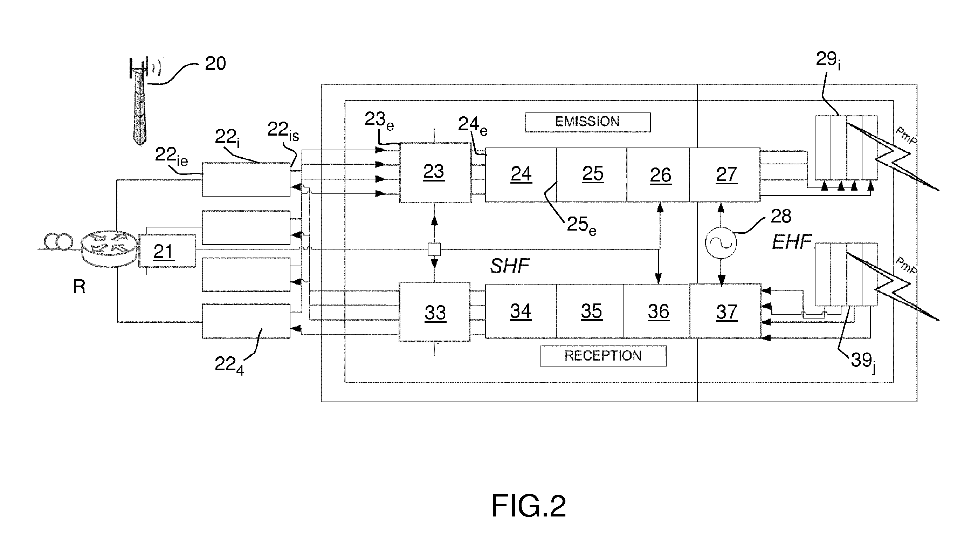

La figure 2 présente les blocs diagramme du système construit sur une série de sous-ensembles hyperfréquence très large bande. Le système est implanté sur un pylône ou mât 20 qui, avec les éléments de routage R, constitue un noeud de transmission ou « transmission hub » qui est associé à un secteur Z comprenant plusieurs terminaux.

Le « hub » de transmission 1 (figure 1) est relié à la fibre optique et comprend un switch-routeur-agrégation R et, par exemple, un gestionnaire 21 qui permet de configurer le système en appliquant les commandes des caractéristiques des modems ainsi que les commandes de commutation et de déphaseurs détaillées ci-après. Le dispositif comprend plusieurs entrées 20e et plusieurs sorties 20s (non représentées pour des raisons de simplification) entre le routeur R et une pile de modems 22i, TDD abrégé anglo-saxon de Time Division Dulpex, qui fonctionnent chacun sur une fréquence intermédiaire Fli, i étant l'indice du modem. Le nombre de modems est choisi en fonction du nombre de terminaux et de la capacité demandée. La bande de chaque modem ou canal est par exemple de 20, 40 ou 80 MHz. La bande totale nécessaire est de la classe du GHz en incluant les bandes de garde. Ainsi, la fréquence intermédiaire Fli devra se situer au moins en SHF pour contenir une telle bande. Typiquement on utilisera une bande passante efficace d'au moins 250 à 500 MHz contiguë aller-retour.

Le gestionnaire 21 a notamment pour fonction de configurer le système en transmettant par exemple vers un module de déphasage une commande permettant d'adapter la valeur de la phase Φ de chaque voie d'un faisceau, en fonction de la disposition des différents terminaux présents dans un sous-secteur ou un secteur. Le gestionnaire 21 va aussi gérer la puissance d'émission de chaque modem 22i par faisceau en fonction de la position du terminal à atteindre. Il gère aussi la valeur de la fréquence Fli de chaque modem, il gère enfin les amplitudes de réception. Le fonctionnement du gestionnaire 21 sera précisé en fin de description.

Chaque modem 22i est sur un canal Ci dans cette large bande FI. Dans chaque faisceau Fi, on peut connecter un ou plusieurs terminaux pour un modem.

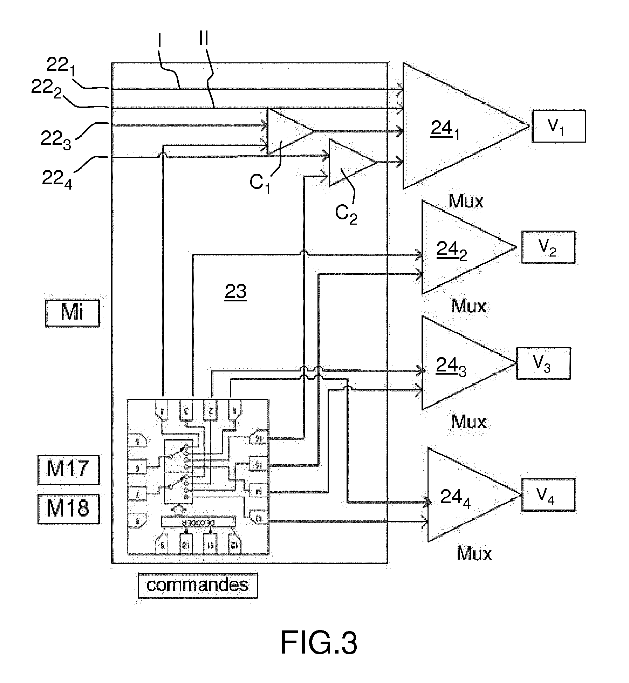

Du côté de la partie émettrice du système, les sorties 22is des modems 22i sont connectées aux entrées 23e d'un ensemble de commutateurs 23 affectant les modems aux voies Vi (figure 3). L'ensemble de commutateurs 23 va commuter les modems vers les ports 24e du module de multiplexage 24, le module étant composé de plusieurs multiplexeurs 24l. Chaque multiplexeur du module de multiplexage 24 va multiplexer les modems 22i sur autant de ports intermédiaires correspondant chacun à un faisceau, affectant ainsi un groupe de modems sur une voie Vj (figure 3). Les résultats de ces multiplexages sont transmis à un module 25 de formation de voies afin de créer un réseau de faisceaux de répartition régulière autour de l'axe de l'antenne du système. La formation de voies est destinée à réaliser les faisceaux qui contiendront dans chacun d'eux un multiplex de modems créé en 24.

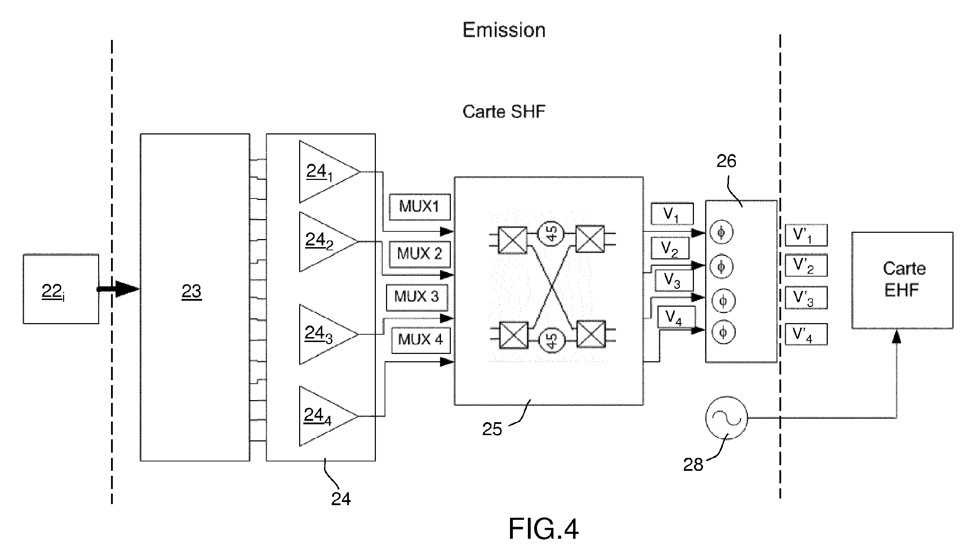

Dans la chaine émission, par exemple, chaque sortie 24s de multiplexeur 24I est appliquée à une entrée 25e d'un module de formation de voies MBF 25, celui-ci va combiner et coupler ces entrées pour créer des voies Vj (figure 4).

La formation des voies est réalisée en deux temps: un premier sous ensemble 25 réalise le nombre désiré de voies (typiquement 4 ou 8) qui sont alors symétriques et régulières par rapport à l'axe de rayonnement, un second module 26 modifie les phases des voies en vue de l'orientation des faisceaux autour de leur position symétrique de base.

Le réseau de faisceaux créé par le module MBF 25 est donc transmis à un module de déphasage 26 à qui on applique un mot digital (3 bits par exemple ) qui produit le déphasage ΔΦ (décalage angulaire) sur chacune des voies Vj afin de placer plus précisément les faisceaux les uns par rapport aux autres, précisant ainsi la position des faisceaux pour la meilleure association et couverture des terminaux. Le module de déphasage 26 peut en plus de la fonction de réglage angulaire des faisceaux, compenser les déphasages résultant de lignes contenues dans les modules du système. La sortie de chaque port déphasé est transmise à un module 27 de transposition-amplification de puissance en émission piloté par un oscillateur local 28 très stable à faible bruit de phase distribué aux MMIC du module 27, par exemple, et plus précisément un synthétiseur SHF/EHF. Le synthétiseur permet une transposition synchronisée vers les ports antennaires d'émission et de réception. Le module de transposition et amplification est réalisé en technologie circuit intégré monolithique hyperfréquence ou MMIC.

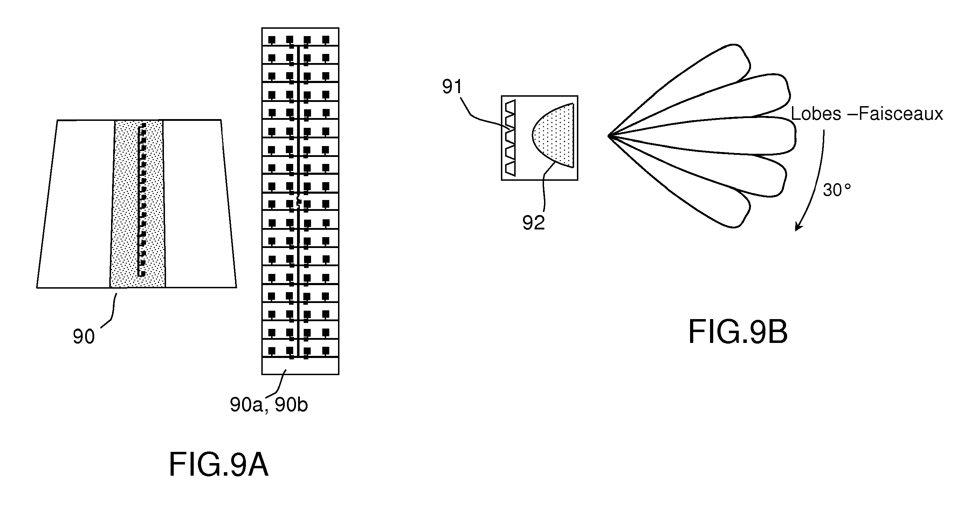

Le module de transposition 27 est connecté du côté de l'éther à au moins deux antennes élémentaires 29i, constituées, par exemple, de colonnes de patch ou de sources au plan focal d'une lentille, créant, par couplage électromagnétique, les faisceaux désirés à partir des voies, ces faisceaux rayonnent la capacité affectée par les multiplex de modems aux terminaux sous la couverture du faisceau. Des exemples de réalisation d'antennes sont donnés en figure 9.

Le module de transposition 27 et le sous-ensemble antennaire EHF composant le diagramme de rayonnement à partir des voies formées en SHF constituent la partie active du dispositif. La partie SHF est une partie passive une fois configurée (commutateurs et déphaseurs établis).

Afin d'illustrer l'invention, il est possible de donner l'exemple chiffré suivant : l'utilisation de 16 modems, 32 terminaux, des sous-secteurs ou faisceaux compris entre 4 à 8.

Technologiquement, le système comprend une première carte SHF (figure 4) comportant les circuits passifs à pertes, le module de commutation 23, le module de multiplexage 24, le module MBF 25, le déphasage 26, et une carte EHF comprenant les principaux éléments actifs, notamment le module de transposition-amplification 27 et les antennes. La réalisation complète s'effectue en adjoignant deux sous-ensembles symétriques, l'un pour l'émission, l'autre pour la réception. Les sous-ensembles émission et réception sont identiques pour la partie SHF et ils diffèrent sur la partie EHF.

La partie réception du système comporte un ensemble d'antennes élémentaires 39j recevant les signaux, constituées de colonnes de patch ou de sources au plan focal d'une lentille, par exemple identiques aux antennes 29j. Les sorties des antennes de réception 39j sont connectées à un module de transposition-amplificateur comprenant des récepteurs faible bruit 37 pilotés par l'oscillateur local 28 précité. Les signaux transposés sont transmis à un module de déphasage 36 qui applique les mêmes coefficients de déphasage qu'à l'émission sur chacun des faisceaux. Les voies rephasées sont ensuite transmises à un module MBF 35 identique au module 25, puis à un démultiplexeur 34. La sortie du démultiplexeur est reliée à plusieurs entrées d'un commutateur 33 configuré de façon identique au commutateur 23. Les sorties 33s du commutateur 33 sont transmises aux différents modems.

Les fonctions de commutation, de multiplexage et de formation de voie sont réalisées, par exemple, en fréquence intermédiaire FI. Les pertes sont ainsi masquées par la carte EHF comprenant, par symétrie avec la partie émission, le module d'amplification faible bruit-transposition-amplification. Le système une fois configuré, cette partie SHF est passive et garantit une faible consommation et une forte robustesse.

Les modems 22i sont commutés afin de pouvoir donner plus de capacités aux faisceaux selon les besoins ou d'assurer une redondance en cas de panne de l'un d'eux. La réalisation des commutateurs est par exemple assurée par une matrice de commutation en technologie circuit intégré monolithique hyperfréquence ou MMIC AsGa afin d'obtenir une isolation importante entre les canaux et obtenir une intégration nécessaire à la compacité de la carte SHF. Plusieurs commutateurs élémentaires sont mis en série et en parallèle entre les modems et les multiplexeurs selon le nombre de modems à mettre par voies et les niveaux d'adaptation de charge et de résilience souhaités.

La figure 3 montre un exemple de commutation où deux modems supplémentaires servent à la résilience ou à l'augmentation de capacité dans n'importe quel sous-secteur. A cette fin, un commutateur de type SPT4, connu de l'Homme du métier, se connecte par des coupleurs avec les modems établis aux ports d'entrée de chaque multiplexeur. Pour la simplification de la représentation on n'a représenté que le câblage sur la première voie, le même schéma s'appliquant sur chacune. Si plus de modems sont à échanger on utilisera plus de commutateurs et de coupleurs sur ce principe ou sur un autre. Les modems 22₁, 22₂ sont liés directement, I, II, au multiplexeur 24₁; le modem 22₂ est lié à une première entrée C₁ₑ₁ d'un coupleur C₁, la deuxième entrée C₁ₑ₂ du coupleur reçoit les signaux modem M₁₇ venant du commutateur; le modem 22₃ est lié à une première entrée C₂ₑ₁ d'un coupleur C₂, la deuxième entrée C₂ₑ₂ du coupleur C₂ reçoit les signaux modem M₁₈ du commutateur, la sortie C₁ₛ du coupleur C₁ et la sortie C₂ₛ du coupleur C₂ sont reliées au multiplexeur 24₁.

Les sorties 24s des multiplexeurs sont ensuite redirigées vers le module de formation des voies Vj du module de formation de voies MBF (voir figure 4). Un schéma similaire est appliqué pour la partie réceptrice du système, symétriquement, en réception, les entrées des démultiplexeurs sont éclatées vers les ports du commutateur de modems.

Chaque faisceau véhicule plusieurs modems multiplexés. En émission, les sorties des ports de la matrice de commutation alimentent les ports des multiplexeurs d'émission et respectivement on reçoit les signaux de retour sur les ports des démultiplexeurs pour entrer dans la matrice de commutation.

Les multiplexeurs ou les démultiplexeurs utilisés dans la présente invention sont, par exemple, réalisés par des lignes et des coupleurs cascadés. Ces coupleurs sont bien connus de l'Homme du métier, tels que les coupleurs de Lange, les coupleurs Wilkinson, les coupleurs hybrides ou encore en anneau.

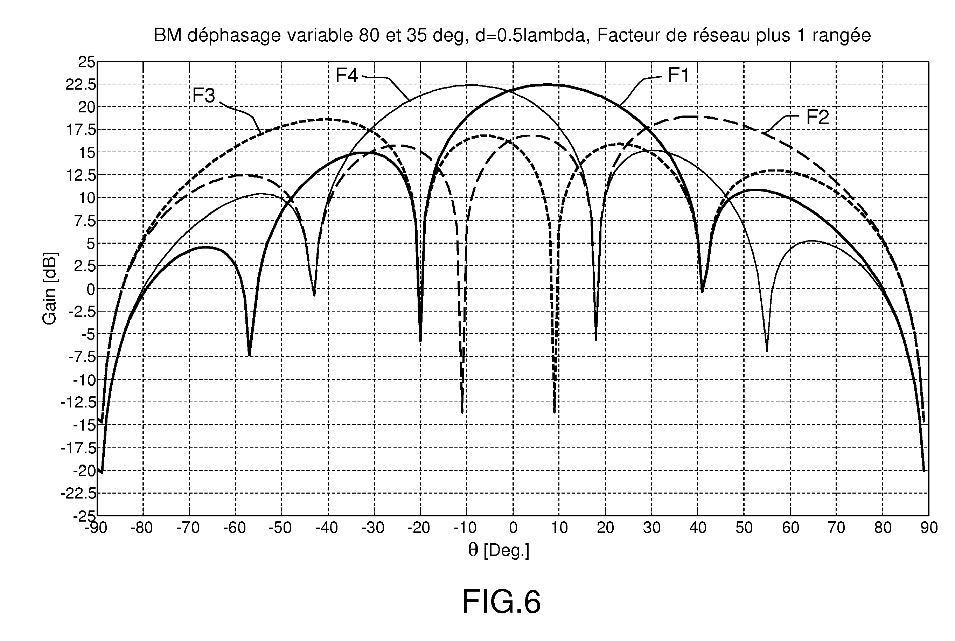

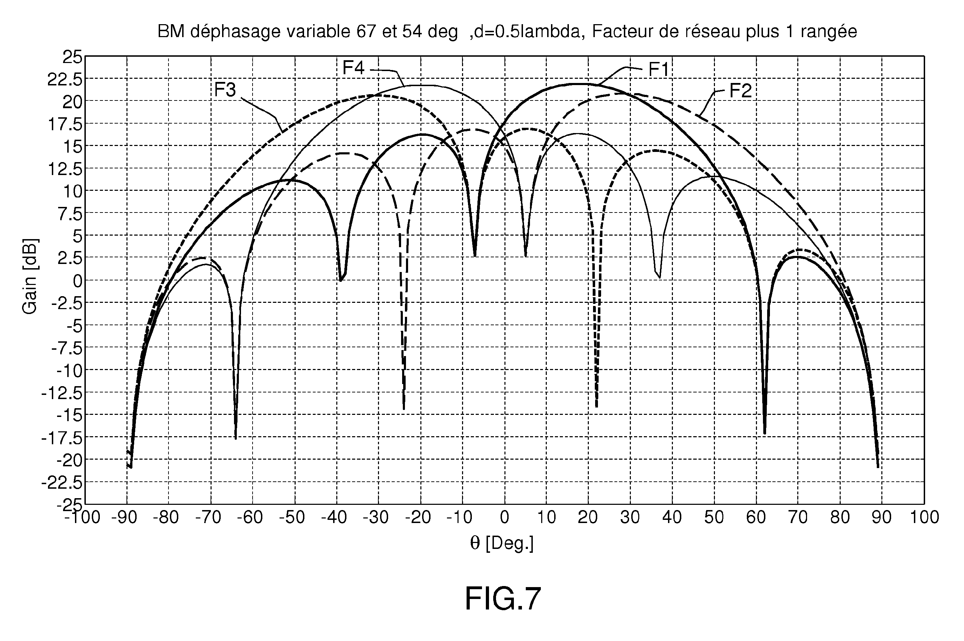

La formation de voies est destinée à réaliser les faisceaux qui contiendront les multiplex de modems dans chacun d'eux. Dans la chaîne émission, par exemple, chaque sortie de multiplexeur est appliquée à une entrée d'un module MBF. Ce dernier va combiner et coupler ces entrées pour créer des voies Vj et déphaser ces voies pour, en sortie, fournir des voies Vj', qui, par combinaisons dans l'antenne finale, produiront les directions de faisceaux. La formation des voies est réalisée en deux temps, par exemple: un premier sous-ensemble réalise le nombre désiré de voies, typiquement de 4 ou 8, qui sont alors symétriques par rapport à l'axe de rayonnement, un second sous-ensemble modifie les phases des voies en vue de l'orientation des faisceaux autour de leur position symétrique de base en écartant ou en resserrant les faisceaux par rapport à l'axe comme on peut le constater en comparant les figures 6 et 7.

La figure 4 donne un exemple de schéma de formation de voies de base à 4 voies à partir, par exemple, d'une matrice de Buttler dans le module 25 suivie de déphaseurs du module 26. Chaque multiplex de modems Muxi est transmis au module 25 de formation de voies qui génère plusieurs voies V₁, V₂, V₃, V₄.

La fabrication des voies est réalisée par un dispositif de lignes et de coupleurs réalisant les combinaisons en phase pour chaque direction. A cette fin on pourra utiliser des technologies connues de l'Homme du métier, telles que, des matrices de Buttler (figure 4 module 25) ou des matrices de Blass ou encore une lentille de Rothman. Ces types de circuits ont été réalisés dans les gammes d'hyperfréquence et notamment avec succès en SHF par plusieurs laboratoires académiques. La figure 6 montre un exemple des lobes et directions obtenues pour 4 voies.

Aux sorties du circuit de formation de voie MBF, 25, les voies V₁, V₂, V₃, V₄ sont ensuite décalées en phase par un rang de déphaseurs 26 pour préciser, autour de leur position de base, les directions souhaitées. Les voies déphasées sont référencées V'₁, V'₂, V'₃, V'₄ (figure 4).

Pour la réception ce sera à l'entrée du MBF. Ces déphaseurs ont un autre rôle essentiel: ils compensent les déphasages apportés par les différences de longueur de lignes apparaissant dans la distribution de l'oscillateur local et éventuellement dans les MMIC de transposition et amplification. La figure 7 montre un exemple de décalage des directions pour un jeu de déphasage.

Les modules 23, 24, 25 et 26 sont réalisés en technologie circuit imprimé micro-ruban ou « strip line » travaillant en hyperfréquences de longueurs d'onde centimétriques. A ces fréquences on obtient la bande requise. Le système ne consomme pas du tout.

La carte SHF peut aussi comprendre le synthétiseur, celui-ci va servir d'oscillateur local pour la transposition SHF-EHF en émission et EHF-SHF en réception. Un synthétiseur est nécessaire pour la programmation des fréquences RF, pour la qualité du bruit de phase nécessaire aux modems TDD connus de l'Homme du métier ainsi que pour s'assurer de la précision et de la dérive à long terme. En effet, dans ces fréquences et à très large bande, ces qualités sont indispensables pour un bon fonctionnement du système. Autrement dit, les sources de fréquence classiques des systèmes point à multipoint standards (WiMAX, WiFi ou autres LMDS) ne conviennent pas pour l'EHF et la très large bande, du fait que le bruit de phase ou l'instabilité sont proportionnels au carré de la fréquence.

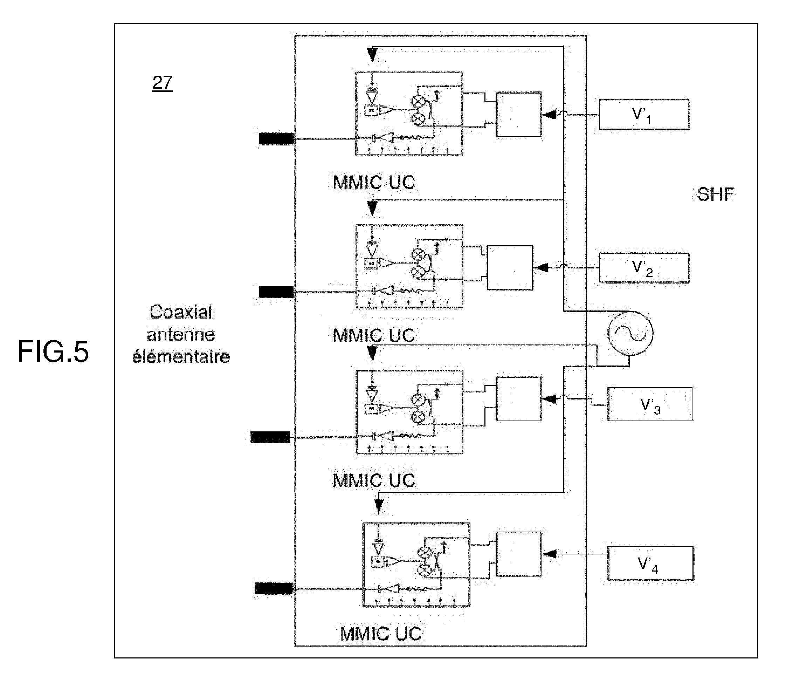

La carte EHF permet de transposer le dispositif réalisé en SHF sur la gamme EFH, elle interface les sous-ensembles émission et réception à formation de voie avec les éléments rayonnants du sous-système antennaire en EHF. Elle est constituée des MMIC qui effectuent les opérations suivantes, représentées à la figure 5 :
- en émission, les opérations sont les suivantes: amplification contrôlée, pour traiter les pertes de la carte SHF des circuits passifs et notamment de la formation de voie sensible à l'amplitude; multiplication de l'OL, transposition de la SHF à l'EHF (généralement avec mélangeur à réjection d'OL), pré amplification de puissance, puis, de façon optionnelle, amplification de puissance finale, enfin transition micro-ruban ou en anglo-saxon micro-strip vers le coaxial de l'antenne élémentaire. On disposera d'autant de MMIC qu'il y a de faisceaux et d'antennes élémentaires;
- en réception, les opérations sont les suivantes : transition coaxial antenne sur micro-strip, amplification très faible bruit, multiplication d'OL, transposition EHF-SHF (généralement avec mélangeur à réjection d'image), amplification variable de sortie en SHF contrôlée pour éviter toute saturation des modems et équilibrer les voies afin de ne pas dégrader les diagrammes créés par la formation de voie. Cet équilibrage en amplitude à la réception se fait grâce à la configuration par le système de gestion 21 sur la commande des atténuateurs des MMIC.

Ces circuits sont réalisés selon des technologies connues AsGa, GaN/Si ou SiGe qui disposent, à ces fréquences millimétriques, des sous-fonctions citées qui seront organisées et implantées dans ces MMIC en fonction des spécifications du système.

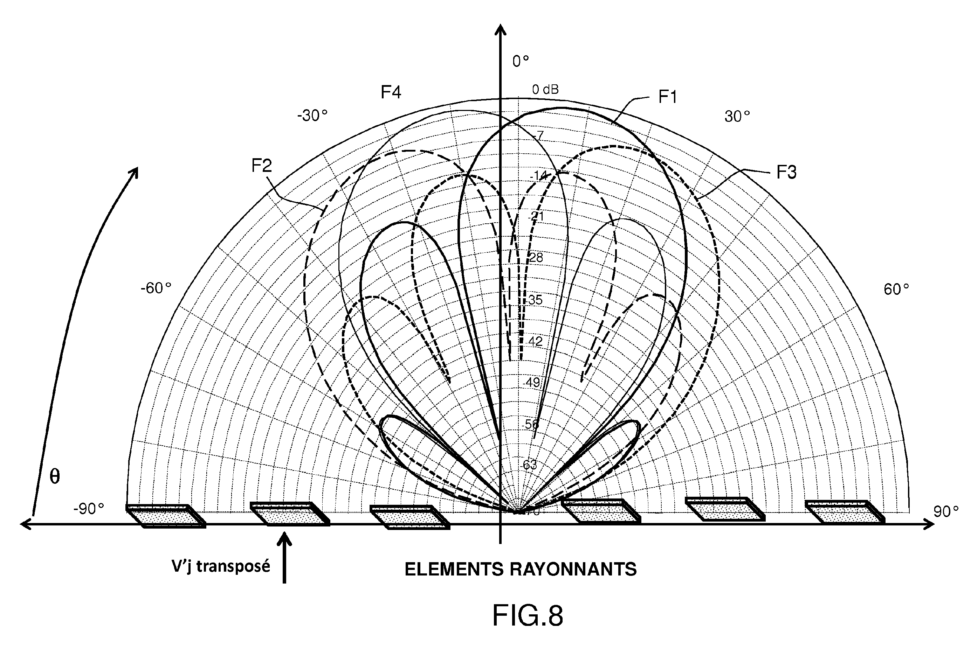

Afin de réaliser le rayonnement des faisceaux, en émission par exemple, chacune des voies V'j une fois transposée en EHF, va être injectée dans autant d'éléments rayonnants d'un système antennaire qui va constituer les faisceaux comme il est représenté sur la figure 8. Deux solutions d'antenne sont données comme exemple selon les objectifs de couverture.

L'antenne 90, dont un exemple est donné à la figure 9A, comporte au mois deux antennes « colonnes » 90a, 90b, présentées ci-après, disposant d'un gain unitaire par exemple de 16dbi pour une antenne de 90° en azimut et 6° en élévation. L'association de ces antennes «colonnes» aux entrées V'j créées par la formation de voies va créer un nombre de faisceaux égal au nombre d'antennes élémentaires. Chaque faisceau aura une ouverture en élévation identique à celle de l'antenne «colonne», une ouverture en azimut égale à celle de l'antenne «colonne» élémentaire divisée par le nombre d'antennes et enfin aura un gain multiplié par ce même nombre d'antennes. La réalisation des antennes « colonne » peut s'effectuer, par exemple de deux façons, soit en associant un ensemble vertical de fentes dont l'éclairement est constitué par un guide d'onde (antennes à fente), soit par un ensemble vertical de patch alimentés par des lignes micro ruban (colonne de patch figure 9) ; plusieurs réalisations sur cette technologie ont été réalisées avec succès dans la gamme EHF. Ce dispositif d'antenne est destiné à une couverture large (90°) environ et des lobes de faisceaux de 20 à 30° espacés de 10 à 30°. Le gainde chaque faisceau étant d'environ 21dBi pour un système à 4 voies par exemple. Plus on a de voies et d'antennes élémentaires plus les faisceaux sont nombreux et fins et de gain important.

La figure 9B représente un exemple d'antenne pour un fonctionnement dans un secteur plus étroit avec des faisceaux plus resserrés. Dans les ondes EHF on peut réaliser en effet des antennes directives avec des lentilles 92 comme en optique mais avec des matériaux plastiques. La lentille est éclairée par une source 91 cornet ou patch à son foyer.

Avec cette technologie, une façon de réaliser le système antennaire est de placer au plan focal horizontal d'une lentille, de part et d'autre de l'axe optique, des sources élémentaires connectées aux MMIC d'émission ou de réception comme il a été décrit ci-dessus. On obtient dans ce cas des faisceaux dont la forme est quasiment celle fournie par la lentille, quasiment de même gain et défléchi dans le plan horizontal de part et d'autre de l'axe optique. Le mot « quasiment » indique que, plus une source est proche de l'axe, plus le lobe d'antenne créé a une forme proche de celle du faisceau dans l'axe. Au-delà de 2 sources par rapport à l'axe, les faisceaux sont fortement dégradés. Ce dispositif d'antenne convient pour une couverture plus resserrée et portant plus loin (par rapport à la technologie patch 3.4.3). Il est destiné à une couverture de 30 à 45° environ, avec des lobes d'environ 10° espacés de la même valeur angubire. Le gain d'un faisceau étant cette fois d'environ 26dBi. On notera dans ce cas que la lentille et ses sources focales font objet de formation de voies fixe et que les modules 25 et 26 sont optionnels si le système se contente de faisceaux non réglables.

Le gestionnaire 21 ou NMS, abréviation anglo-saxonne de 'Network Management System' est un logiciel implanté dans un serveur en tête de réseau (voire déporté) qui assure la configuration du réseau et sa surveillance ou supervision. Dans le cadre de l'invention, on entre dans la base du NMS les positions géographiques des terminaux ainsi que leur demande de capacité selon un terme anglo saxon Service Level Agreement (SLA). Le NMS dispose du calcul du bilan de liaison (équation des télécommunications, pertes et gains par voies du dispositif...) de tous les liens qui incluent notamment la distance des terminaux et le gain des faisceaux dans chaque direction (diagramme antennaire) comme on le voit sur les figures 7 et 8. Pour un fonctionnement optimal du réseau les bilans de liaison doivent être équilibrées c'est le traitement du « near-far » dans le dispositif. Les deux paramètres clés sont la puissance à l'émission, le niveau à la réception et le gain local (dans la direction du terminal). Un algorithme d'optimisation (lecture de tables ou itérations par exemple) est mis en oeuvre permettant au gestionnaire de configurer la puissance des modems à l'émission, télé activer la puissance des modems des terminaux, régler le gain des récepteurs (MMIC) et placer au mieux les faisceaux grâce à la commande des déphaseurs. Ces opérations se font à l'installation du réseau, lorsque l'on introduit un terminal supplémentaire ou lors d'opération de maintenance.

De même le NMS avec le routeur supervise la charge de chaque lien (nombre de paquets par secondes) selon les plages horaires on constatera un croissance d'activité dans tel ou tel sous-secteur (défini par un faisceaux) lorsque tel lien arrive à saturation, par la commande de la matrice de commutation, le NMS pourra affecter un modem supplémentaire (en réserve dans la pile de modem notamment pour la résilience) voire réaffecter un modem sous-utilisé dont le travail sera repris par le modem voisin (les modems pouvant selon la figure 1 servir plusieurs terminaux). Le serveur NMS héberge un logiciel comportant les équations de fonctionnement et les algorithmes d'optimisation, le serveur émet en conséquence les commandes nécessaire au travers d'un réseau local virtuel ou VLAN (bien connu des concepteurs de réseau Ethernet), sécurisé, reliant l'ensemble des équipements mis en oeuvre dans le réseau ou système, c'est-à-dire le hub de transmission et le dispsositif ainsi que tous les terminaux.

Par rapport à un système point à multipoint par secteur, le dispositif apporte les fonctions et les avantages suivants :
- l'établissement des connexions très haut débit point à multipoint dans plusieurs faisceaux simultanés,
- l'affectation différenciée des capacités dans chaque faisceau formé,
- l'équilibrage de charge entre les faisceaux,
- le gain sur les bilans et la répartition optimisée et adéquate de l'énergie sous la couverture,
- l'isolation fréquentielle du secteur voisin,
- la résilience des liaisons due à des pannes de modem,
- le traitement du gain selon la distance d'un terminal à la station de base,
- la réutilisation du spectre, l'augmentation de la capacité totale par réutilisation des canaux de fréquence intermédiaire,
- la fiabilité élevée par l'utilisation de circuits passifs ou actifs de type AsGa,
- des économies d'énergie, car on éclaire seulement les zones où se trouvent les clients.

A titre d'exemple si l'on réalisait le système décrit à la figure 1 selon une méthode de l'art antérieur, il faudrait 18 faisceaux hertziens pour réaliser le Backhaul, donc 18 radios au noeud de transmission et 18 couples de fréquences. Ceci conduirait à un problème d'installation au noeud de transmission, à une gestion des fréquences, mais surtout à un coût de fonctionnement pratiquement double, location des sites, location de deux fréquences par canal, deux fois plus d'équipements à maintenir or, dans ces réseaux, les coûts récurrents égalent, en trois ans les coûts d'acquisition.

## Revendications

1. Dispositif hyperfréquence dans un système réalisant la formation de faisceaux directifs multi liens simultanés adaptés à une couverture donnée, utilisant une ou plusieurs antennes multifaisceaux, **caractérisé en ce qu'**il comporte au moins les éléments suivants :
• un gestionnaire (21) de configuration adapté à gérer des commandes de commutation et de déphasage configurant les faisceaux,
• un ensemble de modems (22i) adapté à fonctionner à une fréquence intermédiaire configurée par le gestionnaire,
• pour la partie émission chaque sortie d'un modem étant en liaison avec un ensemble de commutateurs (23) affectant les modems à plusieurs voies Vj,
• un ensemble de multiplexeurs (24) recevant les signaux issus de l'ensemble de modems (22i), ledit ensemble étant adapté à multiplexer les modems par groupe sur autant de ports intermédiaires correspondant chacun à un faisceau,
• un module (25) de formation de voies Vj recevant chaque sortie des multiplexeurs, afin de créer un nombre de voies Vj réparties autour de l'axe de l'antenne,
• un module de déphasage (26) adapté à appliquer un décalage angulaire sur les faisceaux des voies Vj,
• un module de transposition-amplification (27) de puissance piloté par un module de pilotage(28),
• au moins deux antennes (29i) connectées audit module de transposition-amplification (27).

2. Système selon la revendication 1 **caractérisé en ce qu'**il comporte au niveau de la partie réception :
• un ensemble d'antennes (39j) reliées à un module de transposition-amplification (37),
• un module de déphasage (36),
• un module de formation de voies (35),
• un démultiplexeur (34) relié à un ensemble de commutateurs (33i), ledit ensemble de commutateurs étant relié aux modems (22i).

3. Système selon l'une des revendications 1 à 2 **caractérisé en ce que** ledit système est adapté à fonctionner en hyperfréquence SHF/EHF, l'ensemble commutateurs, le module de multiplexage, le module formation de voies, le module de déphasage étant adaptés à travailler en SHF, le module de transposition et les antennes élémentaires étant adaptés à travailler en EHF.

4. Système selon la revendication 3 **caractérisé en ce que** les modules travaillant en SHF sont des circuits passifs et **en ce que** les modules de transposition amplification (27, 37) sont des circuits intégré monolithique hyperfréquence MMIC AsGa.

5. Système selon la revendication 4 **caractérisé en ce que** le module de pilotage (28) est un oscillateur local très stable à très faible bruit de phase, distribué au module de transposition-amplification (27, 37).

6. Système selon l'une des revendications 1 à 2 **caractérisé en ce que** le module de pilotage (28) est un synthétiseur.

7. Système selon l'une des revendications 1 à 4 **caractérisé en ce que** les antennes (29j), (39j) sont des antennes colonnes de patch ou fentes.

8. Système selon l'un des revendications 1 à 4 **caractérisé en ce que** les antennes (29j) (39j) sont des antennes sources au plan focal d'une lentille.
